# EUROPÄISCHE PATENTSCHRIFT

(11) **EP 1 193 433 B1**
(45) Veröffentlichungstag und Bekanntmachung des Hinweises auf die Patenterteilung: **30.06.2010**
(21) Anmeldenummer: 01890244.5
(22) Anmeldetag: 22.08.2001
(51) Int. Cl.: F16K 31/06

(54) **Elektromagnetisches Fluidventil**
Electromagnetic fluid valve
Soupape électromagnétique

(30) Priorität: 27.09.2000 AT 16332000
(43) Veröffentlichungstag der Anmeldung: 03.04.2002
(73) Patentinhaber: Hoerbiger Micro Fluid GmbH, 93092 Barbing-Regensburg (DE)
(72) Erfinder: Strobel, Georg, 93083 Obertraubling (DE)
(74) Vertreter: Grättinger Möhring von Poschinger Patentanwälte Partnerschaft

(56) Entgegenhaltungen:
- DE-A- 19 854 759
- US-A- 1 674 914
- US-A- 2 860 850
- US-A- 2 863 473

## Beschreibung

Die Erfindung betrifft ein Fluidventil, insbesondere Hydraulikventil, mit einem Ventilgehäuse und einem daran abnehmbar befestigten Schaltmagneten.

Derartige Ventile sind in vielfältigsten Ausführungen bekannt, wobei der Schaltmagnet zumeist seitlich so am Ventilgehäuse befestigt ist, dass das von der Magnetspule bei entsprechendem Stromfluss verstellte Betätigungselement unmittelbar auf das Steuer- bzw. Schließelement des Fluidventils einwirkt (vgl. DE 19854759 A1). Die Befestigung und Fixierung des Schaltmagneten erfolgt speziell bei den in diesem Zusammenhang seit vielen Jahren gängigen Vierkantmagneten durch durchgehende Schrauben in den Ecken des zur Erzeugung des magnetischen Flusses erforderlichen Eisengehäuses. Die damit notwendigerweise sehr langen durchgehenden Bohrungen für die ins Ventilgehäuse eingeschraubten Befestigungsschrauben stellen bei der Herstellung des Gehäuses des Schaltmagneten (Schaltmagnetgehäuses) ebenso wie die langen Befestigungsschrauben selbst einen erheblichen Anteil an den Fertigungskosten dar (bei für viele Anwendungen in der Hydraulik gängigen Schaltmagneten mit 25 x 25 mm Querschnitt außen und etwa 70 mm Länge aufweisenden Schaltmagnet-Gehäusen sind beispielsweise vier jeweils 70 mm lange und etwa 3 ½ mm im Durchmesser aufweisende Gehäusebohrungen her- und entsprechende Schrauben bereitzustellen).

Ein weiterer Nachteil der bekannten Anordnungen ist auch darin zu sehen, dass bei Montage und Wartung bzw. Austausch des Schaltmagneten vier Schraubverbindungen zu lösen bzw. zu befestigen sind und dass die Positionierbarkeit des Schaltmagneten am Ventilgehäuse jeweils auf 90 ° Verdrehungen begrenzt ist, damit die Schraubverbindung wieder zusammenpasst.

Aus der US 1674914 ist ein Elektromagnetventil bekannt, bei dem der Medienfluss durch den Elektromagnet hindurch erfolgt. Hierzu ist mit dem einen zylindrischen Mantel und zwei Böden umfassenden Schaltmagnetgehäuse einerseits ein den Einlassanschluss aufweisendes Oberteil und andrerseits ein den Auslassanschluss aufweisendes Unterteil verbunden. Der Einlassanschluss weist dabei einen Sitz auf, der mit einem zentralen, in einer Hülse geführten, mittels des Schaltmagneten betätigbarem Ventilkörper zusammenwirkt, der an seiner Umfangsfläche mehrere Längsnuten aufweist, welche mit der Führungshülse Strömungskanäle ausbilden.

Aufgabe der vorliegenden Erfindung ist es, ein Fluidventil der eingangs genannten Art so zu verbessern, dass die erwähnten Nachteile der bekannten derartigen Anordnungen vermieden werden und dass insbesondere die Herstellungskosten verringert sowie Montage, Wartung und freie Positionierbarkeit erleichtert werden.

Diese Aufgabe wird gemäß der vorliegenden Erfindung bei einem Fluidventil der eingangs genannten Art dadurch gelöst, dass an dem Ventilgehäuse eine im wesentlichen ringförmige Haltescheibe befestigt ist, die eine erste Befestigungseinrichtung aufweist, welche in Eingriff steht mit einer zweiten Befestigungseinrichtung an einem Schaltmagnetgehäuse, das die Spule des Schaltmagneten umgibt und diese an der dem Ventilgehäuse abgewandten Seite abstützt, wobei die Halte scheibe an ihrem Außenumfang und das Schaltmagnetgehäuse an seinem Innenumfang als erste und zweite Befestigungseinrichtung in Form einer Rasteinrichtung zusammenwirkend einerseits zumindest eine Nut und andererseits zumindest eine darin eingreifende Erhebung aufweisen. Damit ist die Haltescheibe - vorzugsweise unabhängig vom Schaltmagneten mittels Schrauben - am Ventilgehäuse vor dem Aufsetzen des Schaltmagneten fixierbar, wonach dieser nur mehr durch Zusammenwirken der Befestigungseinrichtungen angeschlossen und befestigt zu werden braucht. Es entfällt jegliche komplizierte Bearbeitung des Gehäuses des Schaltmagneten - dieses braucht lediglich an geeigneter Stelle mit der zweiten Befestigungseinrichtung versehen werden, die dann mit der ersten Befestigungseinrichtung an der Haltescheibe zusammenwirkt. Diese Befestigungseinrichtung kann sehr leicht auf bekannte Weise so ausgebildet werden, dass eine relative Verdrehung zwischen Ventilgehäuse und Schaltmagnet möglich wird, die eine freie Positionierbarkeit des Schaltmagneten zur Berücksichtigung der konstruktiven Gegebenheiten erlaubt. Die Erfindung ermöglicht weiterhin eine sehr einfache Herstellung der zusammenwirkenden Rasteinrichtungen, wobei die Montage bzw. Demontage vereinfacht ist.

Der dem Ventilgehäuse zugewandte Vorderbereich des die Spule des Schaltmagneten umgebenden Gehäuses kann in weiterer Ausgestaltung der Erfindung zur Aufnahme von an der Spule angebauten Zusatzelementen, insbesondere Schaltelementen, schlitzartig ausgenommen sein, wobei die Nuten bzw. Erhebungen von Haltescheibe bzw. Gehäuse jeweils über den gesamten verbleibenden Umfang umlaufend ausgebildet sind. Die schlitzartige

Ausnehmung des Gehäuses im Bereich der als Rasteinrichtung zusammenwirkenden umlaufenden Nuten bzw. Erhebungen ermöglicht eine leichte federnde Ausweitung des Gehäuses beim Aufschieben auf die Haltescheibe und kann bei entsprechender Dimensionierung der zusammenwirkenden Nuten bzw. Erhebungen auch für eine elastische Vorspannung der eingerasteten Rastverbindung sorgen. Es ist damit eine einfache Montage bei sehr sicherer Verbindung des Schaltmagneten mit dem Ventilgehäuse möglich, wobei es belanglos ist, ob die Nuten im Gehäuse und die Erhebungen auf der Haltescheibe oder umgekehrt angeordnet sind solange nur die Zusammenwirkung dieser Elemente zur Befestigung des Gehäuses samt Spule auf der Haltescheibe bzw. damit am Ventilgehäuse sichergestellt ist.

In weiters bevorzugter Ausgestaltung der Erfindung ist vorgesehen, daß die Nuten und Erhebungen im Querschnitt in Form eines teilweisen Kreises gerundet sind, was insbesonders im Zusammenhang mit der vorstehend angesprochenen geringfügig elastisch aufweitbaren Vorderseite des Gehäuses des Schaltmagneten ein leichtes und einfaches Herstellen der Rastverbindung ermöglicht.

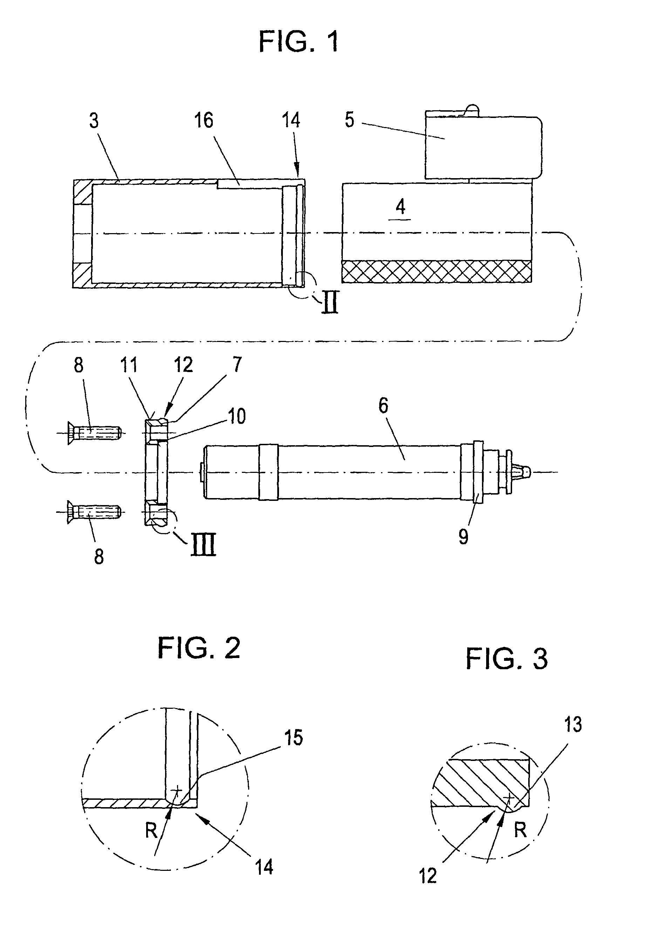

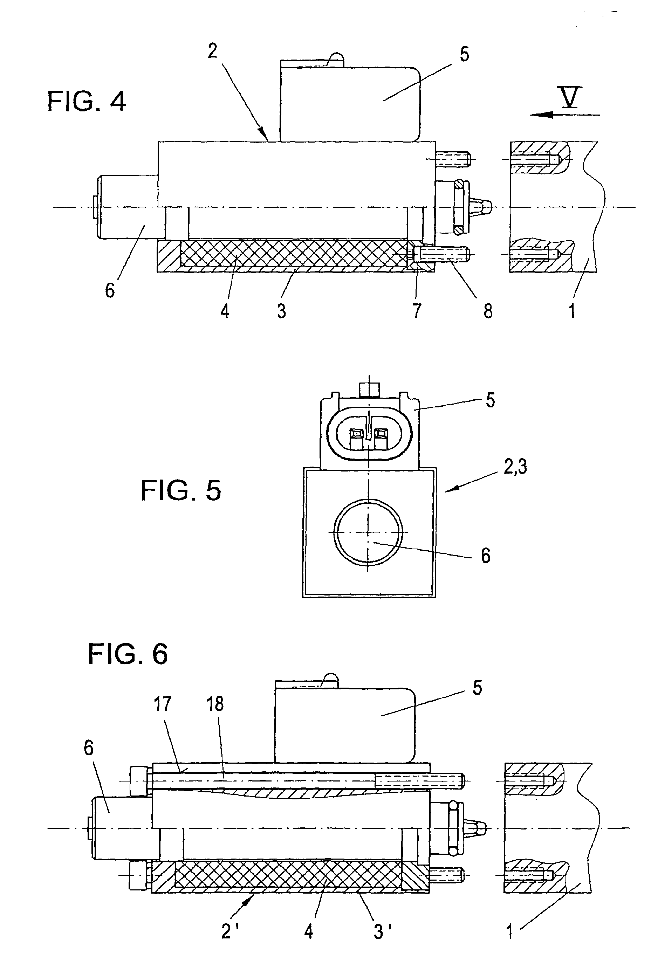

Die Erfindung wird im folgenden noch anhand der in der Zeichnung teilweise schematisch dargestellten Ausführungsbeispiele näher erläutert. Fig. 1 zeigt dabei nach Art einer Explosionszeichnung teilweise geschnitten einen Schaltmagneten samt Haltescheibe für ein erfindungsgemäßes Fluidventil, Fig. 2 und 3 zeigen die Details II und III aus Fig. 1 in größerem Maßstab, Fig. 4 zeigt den Schaltmagneten gemäß Fig. 1 zusammengebaut vor der Montage an einem Ventilgehäuse, Fig. 5 zeigt eine Ansicht entlang des Pfeiles V in Fig. 4 und Fig. 6 zeigt in einer Darstellung gemäß Fig. 4 ein Fluidventil nach dem bisherigen Stand der Technik.

Das insgesamt aus Fig. 4 und 5 ersichtliche Fluidventil weist einen am nicht detailliert dargestellten Ventilgehäuse 1 abnehmbar befestigten Schaltmagneten 2 auf, welcher seinerseits im wesentlichen aus einem Gehäuse 3, einer Spule 4 mit angebauten Zusatzelementen 5 (beispielsweise Schaltelementen), und einem in der Spule bei entsprechendem Stromfluß verstellbaren Druckrohr 6 besteht. Eine im wesentlichen ringförmige Haltescheibe 7 (siehe insbesonders Fig. 1) wird - entgegen der in Fig. 4 zur Verdeutlichung der Unterschiede zu Fig. 6 gewählten Darstellung - unabhängig von Gehäuse 3 und Spule 4 am Ventilgehäuse 1 mittels vier Schrauben 8 befestigt, wobei dies im vorliegenden Falle nach dem Überschieben auf das bereits in das Ventilgehäuse 1 eingesteckte Druckrohr 6 zusammen mit diesem zu erfolgen hat, da das Druckrohr 6 mit einem Bund 9 an einer Ausdrehung 10 der Haltescheibe 7 gesichert ist. Bei entsprechender Gestaltung des Gehäuses 3 könnte aber das Druckrohr 6 auch unabhängig von der Haltescheibe 7 später zusammen mit Gehäuse 3 und Spule 4 aufgeschoben und eingesteckt werden.

Nach der Befestigung der Haltescheibe 7 mit den relativ kurzen Schrauben 8 am Ventilgehäuse 1 kann zuerst die Spule 4 auf das Druckrohr 6 aufgeschoben und sodann außen das Gehäuse 3 über die Spule 4 geschoben werden. Die Haltescheibe 7 weist an ihrem Außenumfang 11 eine erste Rasteinrichtung 12 auf, welche hier von einer umlaufenden Erhebung 13 mit einem Querschnitt annähernd in Form eines teilweisen Kreises (Radius R) ausgebildet ist. Das Gehäuse 3 weist eine zugeordnete zweite Rasteinrichtung 14 am Innenumfang im Bereich des dem Ventilgehäuse 1 zugewandten Endes auf, welche gemäß Fig. 2 von einer umlaufenden Nut 15 mit einem Querschnitt annähernd in Form eines teilweisen Kreises (Radius R) gebildet ist.

Der dem Ventilgehäuse 1 zugewandte Vorderbereich des die Spule 4 des Schaltmagneten 2 umgebenden Gehäuses 3 ist zur Aufnahme der an der Spule 4 angebauten Zusatzelemente 5 gemäß Fig. 1 in einem Bereich 16 schlitzartig ausgenommen, womit das Gehäuse 3 in diesem Bereich leicht auffedern kann, sodaß es beim Überschieben der in den Fig. 2 und 3 ersichtlichen Teilbereiche zu einem Einrasten der Erhebung 13 in der Nut 15 kommt, womit die Spule 4 vom Gehäuse 3 sicher auf der Haltescheibe 7 und damit am Ventilgehäuse 1 gehalten wird.

Aus der Darstellung des Standes der Technik in Fig. 6 ist zu ersehen, daß hier über die ganze Länge des Gehäuses 3' durchgehende Bohrungen 17 und entsprechend lange Schrauben 18 in den vier Ecken des Gehäuses 3' erforderlich sind, um den Schaltmagneten 2' am ansonsten gleich ausgebildeten Ventilgehäuse 1 zu befestigen. Dies verteuert nicht nur die Herstellung sondern behindert auch eine freie Verdrehung des Schaltmagneten 2' um seine Achse vor der Montage, wie sie beispielsweise dann notwendig werden kann, wenn die Zusatzelemente 5 an der Spule 4 zufolge von konstruktiven Gegebenheiten eine bestimmte relative Lage aufweisen sollten.

Abgesehen von der dargestellten konkreten Ausbildung der beiden Rasteinrichtungen 12 und 14 könnten dafür natürlich auch andere bekannte und geeignete Elemente vorgesehen werden - wesentlich ist nur, daß das Gehäuse 3 mit der Spule 4 und gegebenenfalls auch dem Druckrohr 6 nicht über die bisher in diesem Zusammenhang verwendeten langen durchgehenden Schrauben (18 gemäß Fig. 6) am Ventilgehäuse 1 erfolgt, sondern daß am Ventilgehäuse 1 nur eine Haltescheibe 7 befestigt wird, auf der das Gehäuse 3 samt Spule 4 mit einfachen und kostengünstigen Mitteln leicht montiert werden kann. Dies wäre in einer einfachen Form beispielsweise auch durch einige von der Seite her durch das Gehäuse 3 in die Haltescheibe 7 eingeschraubte Umfangsschrauben oder dergleichen zu erreichen, wobei die entsprechenden Gewindebohrungen in der Haltescheibe 7 auch nachträglich erst bei der Montage zur Ermöglichung einer freien Positionierbarkeit angebracht werden könnten.

## Patentansprüche

1. Fluidventil, insbesondere Hydraulikventil, mit einem Ventilgehäuse (1) und einem daran abnehmbar befestigten Schaltmagneten (2), wobei an dem Ventilgehäuse eine im Wesentlichen ringförmige Haltescheibe (7) befestigt ist, die eine erste Befestigungseinrichtung (12) aufweist, welche in Eingriff steht mit einer zweiten Befestigungseinrichtung (14) an einem Schaltmagnetgehäuse (3), das die Spule des Schaltmagneten umgibt und diese an der dem Ventilgehäuse abgewandten Seite abstützt, wobei die Haltescheibe an ihrem Außenumfang und das Schaltmagnetgehäuse an seinem Innenumfang als erste und zweite Befestigungseinrichtung in Form einer Rasteinrichtung zusammenwirkend einerseits zumindest eine Nut (15) und andererseits zumindest eine darin eingreifende Erhebung (13) aufweisen.

2. Fluidventil nach Anspruch 1, **dadurch gekennzeichnet, dass** die Haltescheibe (7) unabhängig vom Schaltmagneten (2) mittels Schrauben (8) am Ventilgehäuse (1) befestigt ist.

3. Fluidventil nach Anspruch 1 oder 2, **dadurch gekennzeichnet, dass** der dem Ventilgehäuse (1) zugewandte Vorderbereich des die Spule (4) des Schaltmagneten (2) umgebenden Gehäuses (3) zur Aufnahme von an der Spule (4) angebauten Zusatzelementen (5), insbesondere Schaltelementen, schlitzartig ausgenommen ist und dass die Nuten (15) bzw. Erhebungen (13) von Haltescheibe (7) bzw. Gehäuse (3) jeweils über den gesamten verbleibenden Umfang umlaufend ausgebildet sind.

4. Fluidventil nach Anspruch 1, 2 oder 3, **dadurch gekennzeichnet, dass** die Nuten (15) und Erhebungen (13) im Querschnitt in Form eines teilweisen Kreises gerundet sind.

## Claims

1. Fluid valve, in particular hydraulic valve, with a valve housing (1) and a switching magnet (2), detachably fastened thereon, wherein a substantially annular retaining disc (7) is fastened to the valve housing, which has a first fastening arrangement (12) which is in engagement with a second fastening arrangement (14) on a switching magnet housing (3), which surrounds the coil of the switching magnet and supports it on the side facing away from the valve housing, wherein the retaining disc on its outer circumference, and the switching magnet housing on its inner circumference have on the one hand at least one groove (15) and on the other hand at least one projection (13) engaging therein, cooperating as first and second fastening arrangement in the form of a detent arrangement.

2. Fluid valve according to Claim 1, **characterized in that** the retaining disc (7) is fastened to the valve housing (1) independently of the switching magnet (2) by means of screws (8).

3. Fluid valve according to Claim 1 or 2, **characterized in that** the front region, facing the valve housing (1), of the housing (3) surrounding the coil (4) of the switching magnet (2), to receive auxiliary elements (5), attached to the coil (4), in particular switch elements, is recessed in the manner of a slot, and **in that** the grooves (15) or projections (13) of retaining disc (7) or housing (3) are respectively formed to run around over the entire remaining circumference respectively.

4. Fluid valve according to Claim 1, 2 or 3, **characterized in that** the grooves (15) and projections (13) are rounded in cross-section in the form of a partial circle.

## Revendications

1. Vanne à fluide, en particulier, vanne hydraulique, comprenant un carter de vanne (1) et un aimant de commutation (2) fixé dessus de façon amovible, un disque de retenue (7) de forme sensiblement annulaire étant fixé sur le carter de vanne, qui présente un premier système de fixation (12), qui est en prise avec un second système de fixation (14) sur un carter d'aimant de commutation (3), lequel entoure la bobine de l'aimant de commutation et soutient celle-ci sur le côté opposé au carter de vanne, le disque de retenue et le carter d'aimant de commutation présentant respectivement sur son pourtour extérieur et sur son pourtour intérieur comme premier et second systèmes de fixation sous forme d'un dispositif d'encliquetage et de façon coopérante d'une part au moins une rainure (15) et d'autre part au moins une éminence (13) s'engageant à l'intérieur.

2. Vanne à fluide selon la revendication 1, **caractérisée en ce que** le disque de retenue (7) est fixé indépendamment de l'aimant de commutation (2) au moyen de vis (8) sur le carter de vanne (1).

3. Vanne à fluide selon la revendication 1 ou 2, **caractérisée en ce que** la zone avant, tournée vers le carter de vanne (1), du carter (3) entourant la bobine (4) de l'aimant de commutation (2) est évidée en forme de fente pour le logement d'éléments supplémentaires (5) rapportés sur la bobine (4), en particulier d'éléments de commutation, **en ce que** les rainures (15) et/ou éminences (13) du disque de retenue (7) et/ou du carter (3) sont conçues respectivement de façon périphérique sur l'ensemble du pourtour restant.

4. Vanne à fluide selon la revendication 1, 2 ou 3, **caractérisée en ce que** les rainures (15) et éminences (13) sont arrondies en section sous la forme d'un cercle partiel.
